# EUROPEAN PATENT APPLICATION

(11) **EP 3 845 726 A1**
(43) Date of publication of application: **07.07.2021**
(21) Application number: 19853379.6
(22) Date of filing: 27.08.2019
(51) Int. Cl.: E04H 15/06

(54) **ROOFTOP TENT FIXING DEVICE**

(30) Priority: 27.08.2018 KR 20180100617
(71) Applicant: iKamper Co., Ltd., Gyeonggi-do 10858 (KR)
(72) Inventor: PARK, Soon Gyu, Paju-si Gyeonggi-do 10858 (KR)
(74) Representative: Osterhoff, Utz
(86) International application number: PCT/KR2019/010946
(87) International publication number: WO 2020/045961

(57) **Abstract**

The present disclosure provides a rooftop tent fixing device. The device includes: clamp bodies configured to be detachably fixed to a fixing frame installed on a bottom of a rooftop tent, each of the clamp bodies including a fixing surface member configured to make contact with the fixing frame when the clamp bodies are fixed to the fixing frame, and a first side member and a second side member formed to extend in one direction from both side edges of the fixing surface member; a fastening member inserted into and fastened to fastening holes formed in the first side member and the second side member of each of the clamp bodies, the fastening member having a through-hole; and a fastening rod provided so as to be inserted into the through-hole of the fastening member. The clamp bodies are fixed to a fixing beam as a gap between the clamp bodies is reduced by rotating the fastening rod in one direction in a state in which one of the clamp bodies and the other clamp body are connected and fixed to each other by the fastening rod and in which the fixing beam installed on a roof of a vehicle is interposed between the clamp bodies fixed by the fastening rod.

## Description

### TECHNICAL FIELD

The present disclosure relates to a rooftop tent fixing device.

### BACKGROUND

In general, a tent refers to an assembly type movable house that can be disassembled and transported. Nowadays, such a tent is mainly used for temporary camping in military, exploration, mountaineering and camping fields rather than everyday residential use.

The shape, size and material of tents are changed depending on the purpose of use, the place of use, the number of people, the season, etc. The purpose of use and the scale of use of tents are very diverse. Such tents include tents used for military and school camping, large-scale tents used for outdoor music, theater and circus, and the like.

In particular, the tents used for leisure activities such as mountaineering, camping, travel and the like have a capacity of about 5 to 10 people and a size that can be carried by a user alone. There are various types of tents for leisure activities, such as a dome type, a triangle type, a roof type, a house type, a single-side slant type, a half-moon type, a dome type, etc.

Although such conventional tents are diverse in size, they are generally bulky, inconvenient to move, difficult to assemble, install and dismantle, and complex in structure, which may cause frequent failures of joints. In particular, when using a leisure tent, a user transports to a camping site mainly by using a vehicle, and then installs and use the prepared tent at the camping site. The tent stored in the vehicle is bulky, which makes it difficult to store a lot of preparations together with the tent. In addition, there is an inconvenience in that the stored tent needs to be taken out from the vehicle and installed.

Furthermore, since a minimum flat ground for spreading and installing the tent has to be secured, there is a limitation in selecting a location for installing the tent.

In order to solve the problems of these conventional tents, a rooftop tent for a vehicle as disclosed in Patent Document 1 has been proposed. In the rooftop tent according to Patent Document 1, tent fabrics and poles are accommodated in a storage space defined inside a base plate and a cover fixed to a roof of a vehicle. When the rooftop tent is opened by rotating the cover from the base plate, the poles and tent fabrics automatically spread to form a tent. Such a rooftop tent is commonly called a car pension, because the rooftop tent can be installed on the roof of the vehicle and used like a mobile home. Such a rooftop tent for a vehicle is designed to combine leisure and automobile culture, and has an advantage that unlike a large trailer or camper, it can be easily installed and used on a vehicle.

Meanwhile, a frame for installing a rooftop tent may be installed on a roof of a vehicle. The frame and the bottom portion of the rooftop tent need to be detachably fixed to each other through the use of a fixing means such as bolts, clamps or the like. However, in the case of fixing the rooftop tent to the roof of the vehicle through the use of such conventional fixing means, the fixing work is inconvenient because the work should be performed using a narrow space between the roof and the rooftop tent, and a problem is posed in that a third party may dismantle the fixing means with malicious intention to steal the rooftop tent.

Accordingly, there is a need for a rooftop tent fixing means capable of preventing theft of a rooftop tent while being easy and convenient to use and maintaining a strong fixing force.

### SUMMARY

The embodiments of the present disclosure have been conceived to solve the aforementioned problems of the related art, and provide a rooftop tent fixing device which is easy and convenient to use, capable of providing a strong fixing force when fixing a rooftop tent to a roof of a vehicle, and provided with an anti-theft function.

According to one aspect of the present disclosure, there is provided a rooftop tent fixing device, including: clamp bodies configured to be detachably fixed to a fixing frame installed on a bottom of a rooftop tent, each of the clamp bodies including a fixing surface member configured to make contact with the fixing frame when the clamp bodies are fixed to the fixing frame, and a first side member and a second side member formed to extend in one direction from both side edges of the fixing surface member; a fastening member inserted into and fastened to fastening holes formed in the first side member and the second side member of each of the clamp bodies, the fastening member having a through-hole; and a fastening rod provided so as to be inserted into the through-hole of the fastening member, wherein the clamp bodies are fixed to a fixing beam as a gap between the clamp bodies is reduced by rotating the fastening rod in one direction in a state in which one of the clamp bodies and the other clamp body are connected and fixed to each other by the fastening rod and in which the fixing beam installed on a roof of a vehicle is interposed between the clamp bodies fixed by the fastening rod.

According to the embodiments of the present disclosure, it is possible to provide a rooftop tent fixing device which is easy and convenient to use, capable of providing a strong fixing force when fixing a rooftop tent to a roof of a vehicle, and capable of effectively preventing theft of the rooftop tent.

### BRIEF DESCRIPTION OF THE DRAWINGS

FIG. 1 is a perspective view illustrating a state in which a rooftop tent is fixed to a roof of a vehicle by a rooftop tent fixing device according to an embodiment of the present disclosure.
FIG. 2 is a side view of the state shown in FIG. 1.
FIG. 3 is a front perspective view showing a clamp body of the rooftop tent fixing device shown in FIG. 2.
FIG. 4 is a rear perspective view showing the clamp body of the rooftop tent fixing device shown in FIG. 2.
FIG. 5 is an exploded perspective view showing the rooftop tent fixing device shown in FIG. 2.
FIG. 6 is a side view showing a state in which the rooftop tent fixing device is fixed to a fixing beam having a shape different from that shown in FIG. 2.

### DETAILED DESCRIPTION

Hereinafter, specific embodiments for implementing the spirit of the present disclosure will be described in detail with reference to the drawings.

In addition, in describing the present disclosure, if it is determined that a detailed description of a related known configuration or function may obscure the subject matter of the present disclosure, the detailed description thereof will be omitted.

In addition, when one component is referred to as being 'connected' to another component, it should be understood that one component may be directly connected to another component and a further component may exist between one component and another component.

The terms used in the subject specification are only used to describe specific embodiments, and are not intended to limit the present disclosure. Singular expressions include plural expressions unless the context clearly indicates otherwise.

Hereinafter, a rooftop tent fixing device according to an embodiment of the present disclosure will be described with reference to the drawings.

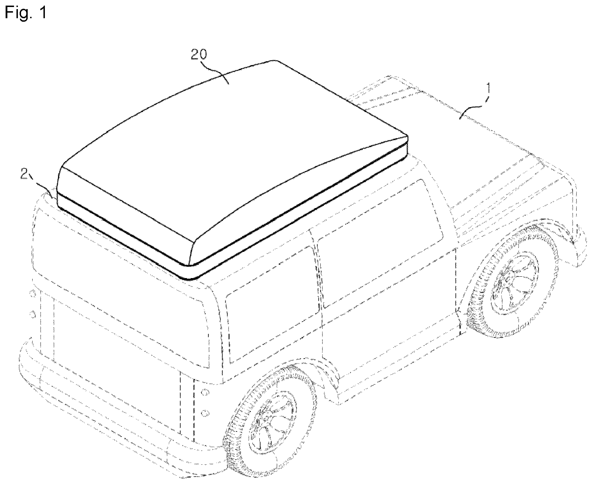

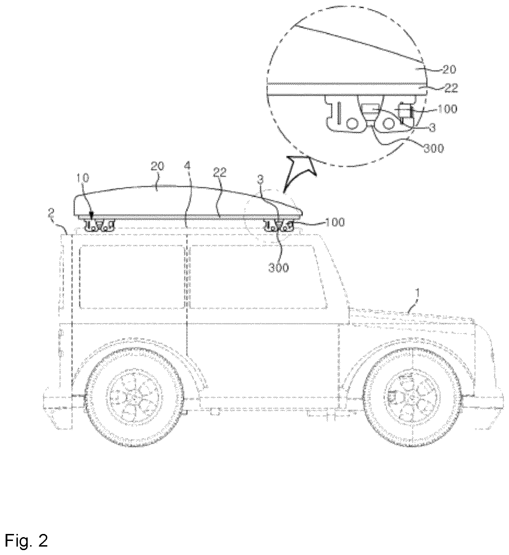

Referring to FIGS. 1 and 2, a rooftop tent 20 may be transported by being fixedly installed on a roof 2 of a vehicle 1. In order to use the rooftop tent 20 for residential purposes when arriving at a campsite, the rooftop tent 20 is merely unfolded in a state in which the rooftop tent 20 is mounted on the roof 2 of the vehicle 1, which makes it possible to completely install the rooftop tent 20. The rooftop tent 20 may be installed so that the portion thereof protruding outside the roof 2 of the vehicle 1 can be supported by a member such as a ladder or the like after the installation is completed.

The rooftop tent 20 may be detachably fixed to a mounting base 4 installed on the roof 2 of the vehicle 1 and a fixing beam 3 fixedly installed so as to be supported by the mounting base 4. At this time, a fixing frame 22 provided on the bottom of the rooftop tent 20 is fixed to the fixing beam 3 by a rooftop tent fixing device 10, whereby the rooftop tent 20 can be fixedly installed on the roof 2. The rooftop tent fixing device 10 is provided so as to be attachable and detachable through a simple operation, and may have a theft prevention function that prevents a third party from releasing the fixed state and separating the rooftop tent.

Hereinafter, a specific configuration of the rooftop tent fixing device 10 according to an embodiment of the present disclosure will be described with reference to the drawings.

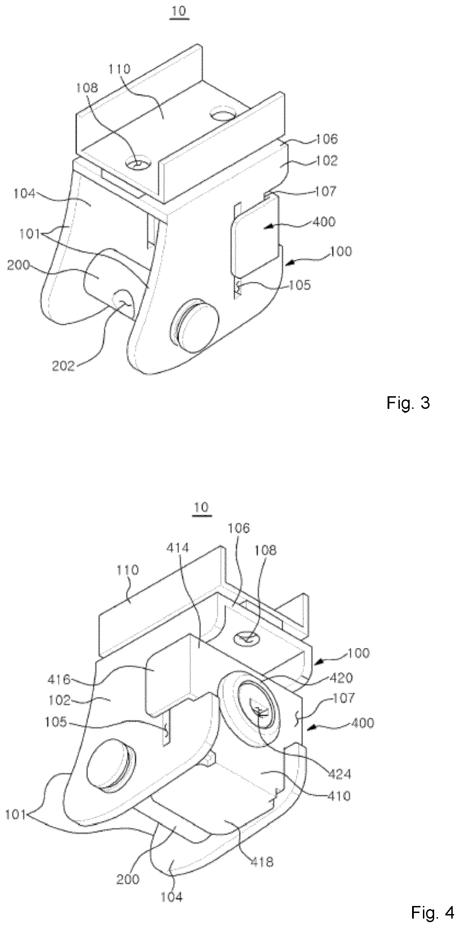

Referring to FIGS. 3 to 5, the rooftop tent fixing device 10 may include a clamp body 100, a fastening member 200, a fastening rod 300 and a locking member 420.

The clamp body 100 is provided so as to be detachably fixed to the fixing frame 22 installed on the bottom surface of the rooftop tent 20. The clamp body 100 may be made of a material having high rigidity, for example, a steel-based material. Furthermore, two clamp bodies 100 may be provided for one fixing beam 3, and may be provided on both sides of the fixing beam 3, respectively. In addition, as the distance between the clamp bodies 100 is reduced by a fastening rod 300 in a state in which the clamp bodies 100 are respectively in contact with both sides of the fixing beam 3, the clamp bodies 100 and the fixing beams 3 may be fixed to each other by a pressure at which the clamp bodies 100 press the fixing beam 3 on both sides.

The clamp body 100 may include a fixing surface member 106 that comes into contact with the fixing frame 22 when the clamp body 100 is fixed to the fixing frame 22, and a first side member 102 and a second side member 104 formed to extend in one direction from both sides of the fixing surface member 106. At this time, the fixing surface member 106, the first side member 102 and the second side member 104 may be provided in a flat plate shape. The clamp body 100 may have a "C" shape as a whole by being composed of the fixing surface member 106, the first side member 102 and the second side member 104.

A fixing bracket 110 is fastened to the fixing surface member 106, and the fixing bracket 110 may be inserted into and fixed to the fixing frame 22. Such a fixing bracket 110 may be fixed by being inserted into the internal space of the beam-shaped fixing frame 22 from the end portion. For example, after being inserted, the fixing bracket 110 may be fixed to the fixing frame 22 by fastening a bolt through a fixing hole 108.

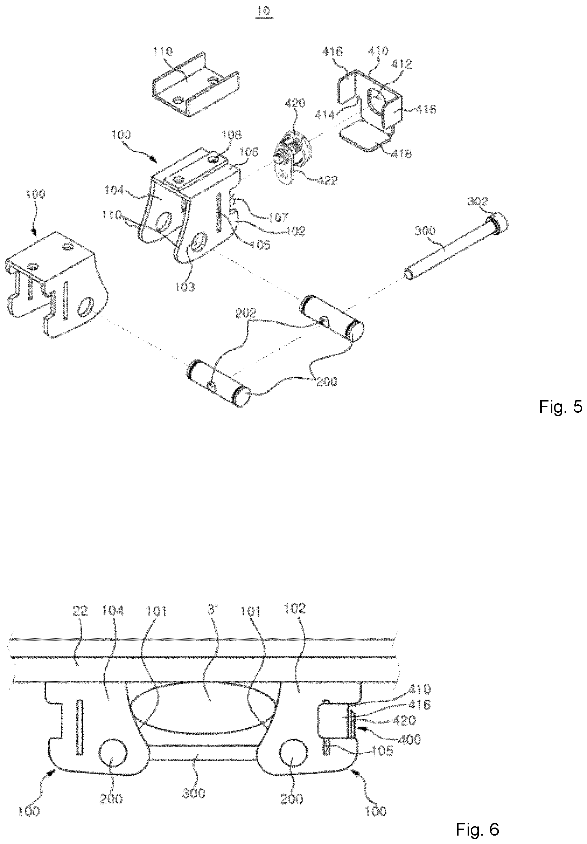

One edge of the first side member 102 and one edge of the second side member 104 are formed as clamping edges 101 having a shape inclined with respect to the fixing surface member 106. The clamping edges 101 may function as portions that make contact with the fixing beam 3. In other words, the portions that press the fixing beam 3 when the clamp bodies 100 come into contact with both sides of the fixing beam 3 and press the fixing beam 3 may become the clamping edges 101. In this case, the clamping edges 101 may have a curved shape, whereby the clamping edges 101 can be fixed by effectively making contact with and pressing the fixing beam 3 having a rectangular cross-section as shown in FIG. 2 as well as the fixing beam 3' having an elliptical cross-section as shown in FIG. 6. In addition, the clamping edges 101 can effectively make contact with and press fixing beams of various shapes.

Fastening holes 103 into which a fastening member 200 is inserted and fastened are formed in the first side member 102 and the second side member 104. In addition, the first side member 102 and the second side member 104 have locking holes 105 into which a locking member 422 of a lock bolt 420 to be described later can be selectively inserted. Furthermore, insertion grooves 107 are formed on the edges of the first side member 102 and the second side member 104 opposite to the clamping edges 101. A locking member 400 is provided so as to be inserted into the insertion grooves 107. In addition, a fixing hole 108 may be formed through the fixing surface member 106. Such a fixing hole 108 may be formed to penetrate the fixing bracket 110.

A fastening member 200 may be fastened to the clamp body 100 by being inserted into the fastening holes 103, and may have a through-hole 202 formed at the central portion thereof. The fastening member 200 may be provided in a cylindrical beam shape, but the shape of the fastening member 200 is not necessarily limited to such a shape. Just like the clamp body 100, the fastening member 200 may be made of a material having high rigidity, for example, a steel-based material.

A fastening rod 300 is provided so as to be inserted into the through-hole 202 of the fastening member 200. In addition, a male thread may be formed on at least a portion of the surface of the fastening rod 300, and a female thread corresponding thereto may be formed on the inner surface of the through- hole 202. Accordingly, when the fastening rod 300 is rotated while being inserted into the through-hole 202, the male and female threads may be engaged with each other so that the fastening rod 300 can be fixed. However, the spirit of the present disclosure is not limited thereto, and the fastening rod 300 and the clamp body 100 may be fastened to each other by a means other than the thread. Like the clamp body 100, the fastening rod 300 may be made of a material having high rigidity, for example, a steel-based material.

As shown in FIG. 2, one clamp body 100 and the other clamp body 100 may be connected and fixed to each other by the fastening rod 300. At this time, as the fastening rod 300 is rotated in one direction in a state in which the fixing beam 3 installed on the roof 2 of the vehicle 1 is interposed between the two clamp bodies 100 fixed by the fastening rod 300, the gap between the two clamp bodies 100 becomes narrow, so that the clamp body 100 can be fixed to the fixing beam 3. The fastening rod 300 may have a head 302 formed at one end thereof. The head 302 may be provided with a cross or flat screw groove so that the fastening rod 300 can be rotated through the use of a tool such as a screwdriver or the like.

The locking member 400 is selectively fixed to the clamp body 100 and provided so as to cover the fastening rod 300 when fixed to the clamp body 100. The locking member 400 may include a locking bracket 410 provided so as to be inserted into the insertion grooves 107 formed in the first side member 102 and the second side member 104, and a lock bolt 420 inserted through a lock bolt insertion hole 412 formed in the locking bracket 410 and fastened to the locking bracket 410. Just like the clamp body 100, the locking member 400 may be made of a material having high rigidity, for example, a steel-based material.

The locking bracket 410 may include an insertion portion 414 formed so as to be inserted into the insertion groove 107, and cover portions 416 formed so as to cover the locking holes 105 when the locking member 400 is inserted into the clamp body 100. The insertion portion 414 is provided in a flat plate shape, and may have such a shape that a portion of both side edges (left and right edges in FIG. 5) protrudes more than other portions. By such a protruding portion, the insertion portion 414 can be inserted into the insertion grooves 107 formed in the clamp body 100. The cover portions 416 may protrude in one direction by being bent from both ends of the protruding portion. In addition, a closing portion 418 may be bent to protrude from the other edge of the insertion portion 414 (the lower edge in FIG. 5) in the same direction as the direction in which the cover portions 416 protrude. The closing portion 418 may be provided to cover one side of the locking bolt 420 when the locking member 400 is inserted into the clamp body 100, and may be provided to close at least one of the opening surfaces of the space between the first side member 102 and the second side member 104. In addition, the lock bolt insertion hole 412 may be formed through the insertion portion 414.

The lock bolt 420 includes a locking member 422 selectively inserted into one of the locking holes 105 formed in the first side member 102 and the second side member 104 as the lock bolt 420 is rotated in a state in which the locking member 400 is inserted into the insertion grooves 107.

The locking member 422 may be formed in such a shape as to protrude in a direction orthogonal to the bolt shape of the lock bolt 420 as shown in FIG. 5. In the present embodiment, there is described a case where the locking member 422 is formed to extend in only one direction. However, the spirit of the present disclosure is not limited thereto. The locking member 422 may be formed to extend in both directions. In this case, locking holes 105 may be formed in both the first side member 102 and the second side member 104.

In addition, a key hole 424 may be formed in the head of the rock bolt 420. Accordingly, the user may rotate a key corresponding to the keyhole 424 in a predetermined direction in a state in which the key is inserted into the keyhole 424, so that the locking member 422 passes through the locking hole 105 to prevent the locking member 400 from being separated from the clamping body 200. As a result, the locking member 400 cannot be separated from the clamp body 100 without the key corresponding to the key hole 424. Since the fixing state of the clamp body 100 to the fixing beam 3 cannot be released without separating the locking member 400, it is possible to prevent the risk of theft.

Hereinafter, the operation and effect of the rooftop tent fixing device 10 having the above-described configuration will be described.

In order to fix the rooftop tent 20 using the rooftop tent fixing device 10 according to the present embodiment, the user may insert and fasten a plurality of clamp bodies 100 into the fixing frame 22 installed on the bottom of the rooftop tent 20. In this case, the number of clamp bodies 100 may be twice the number of fixing beams 3 provided on the roof 2. In other words, two clamp bodies 100 may be fastened to one fixing beam 3.

The rooftop tent 20 may be mounted on the upper side of the roof 2 in a state in which the clamp bodies100 are fastened to the fixing frame 22. In this case, the clamp bodies 100 may be disposed on both sides of each of the fixing beams 3. Thereafter, the positions of the clamp bodies 100 may be adjusted so that the clamping edges 101 of the clamp bodies 100 can make contact with both sides of the fixing beams 3. To this end, the clamp bodies 100 may be kept in a state in which the positions of the clamp bodies 100 are not fixed to the fixing frame 22 but are changeable.

When the clamp bodies 100 come into contact with both sides of the fixing beams 3, the user may reduce the gap between the two clamp bodies 100 by rotating the fastening rod 300 that connects the two clamp bodies 100 on both sides of each of the fixing beams 3 to each other. Accordingly, the clamp bodies 100 are fixed to the fixing frame 22 in a state in which the clamp bodies 100 press the fixing beams 3, so that the fixing frame 22 and the fixing beams 3 can be fixed to each other. As a result, the rooftop tent 20 and the roof 2 of the vehicle 1 may be fixed to each other.

After the fixing of the rooftop tent 20 is completed, the locking member 400 may be inserted into and fixed to the clamp body 100 to prevent theft. To this end, the locking bracket 410 into which the locking bolt 420 of the locking member 400 is inserted may be inserted into the insertion grooves 107 of the clamp body 100. As the user inserts the key into the keyhole 424 and rotates the key in a predetermined direction in this state, the locking member 422 is rotated to pass through the locking hole 105 of the clamp body 100 and is caught in the locking hole 105. At this time, since the locking member 422 and the locking holes 105 are covered by the cover portions 416, the locking member 422 cannot be operated from the outside. In addition, since the opening surface, which is easily accessible from the outside, among the opening surfaces of the space between the first side member 102 and the second side member 104 is closed by the closing portion 418, it is also possible to prevent the access to the lock bolt 420 from the outside.

The rooftop tent fixing device 10 according to the present embodiment as described above has an effect that it is easy and convenient to use when fixing the rooftop tent 20 to the roof 2 of the vehicle 1, capable of providing a strong fixing force, and capable of effectively preventing theft of the rooftop tent 20.

While the embodiments of the present disclosure have been described above as specific examples, these embodiments are nothing more than examples. The present disclosure is not limited thereto, and should be construed as having the widest scope in accordance with the basic idea disclosed herein. Those skilled in the art may combine or substitute the disclosed embodiments to implement a pattern of a shape not indicated herein. This also does not depart from the scope of the present disclosure. In addition, those skilled in the art may easily change or modify the disclosed embodiments based on the subject specification. It is apparent that such changes or modifications also belong to the scope of the present disclosure.

## Claims

1. A rooftop tent fixing device, comprising:
clamp bodies detachably fixed to a fixing frame installed on a bottom of a rooftop tent, each of the clamp bodies including a fixing surface member configured to make contact with the fixing frame when the clamp bodies are fixed to the fixing frame, and a first side member and a second side member formed to extend in one direction from both side edges of the fixing surface member;
a fastening member inserted into and fastened to fastening holes formed in the first side member and the second side member of each of the clamp bodies, the fastening member having a through-hole; and
a fastening rod provided to be inserted into the through-hole of the fastening member,
wherein the clamp bodies are fixed to a fixing beam as a gap between the clamp bodies is reduced by rotating the fastening rod in one direction in a state in which one of the clamp bodies and the other clamp body are connected and fixed to each other by the fastening rod and in which the fixing beam installed on a roof of a vehicle is interposed between the clamp bodies fixed by the fastening rod.

2. The device of claim 1, wherein each of the clamp bodies further includes a fixing bracket fastened to the fixing surface member and capable of being inserted into and fixed to the fixing frame.

3. The device of claim 1, wherein one edges of the first side member and the second side member are formed as clamping edges having a shape inclined with respect to the fixing surface member.

4. The device of claim 3, wherein the clamping edges have a curved shape.

5. The device of claim 1, further comprising:
a locking member configured to be selectively fixed to the clamp bodies and to cover the fastening rod when fixed to the clamp bodies.

6. The device of claim 5, wherein one edge of at least one of the first side member and the second side member is formed as a clamping edge having a shape inclined with respect to the fixing surface member, and
the locking member includes a locking bracket provided so as to be inserted into an insertion groove formed at an edge opposite to the one edge of at least one of the first side member and the second side member, and a lock bolt inserted through a lock bolt insertion hole formed in the locking bracket and fastened to the locking bracket.

7. The device of claim 6, wherein the lock bolt includes a locking member selectively inserted into a locking hole formed in at least one of the first side member and the second side member by rotation of the lock bolt in a state in which the locking member is inserted into the insertion groove.

8. The device of claim 7, wherein the locking bracket includes an insertion portion formed so as to be inserted into the insertion groove, and a cover portion formed so as to cover the locking hole when the locking member is inserted into each of the clamp bodies, and
the lock bolt insertion hole is formed through the insertion portion.

9. The device of claim 8, wherein the locking bracket further includes a closing portion bent in one direction so as to protrude from one edge of the insertion portion.
